# EUROPEAN PATENT APPLICATION

(11) **EP 2 083 035 A1**
(43) Date of publication of application: **29.07.2009**
(21) Application number: 07829457.6
(22) Date of filing: 10.10.2007
(51) Int. Cl.: C08G 63/78, C08J 5/18, D01F 6/62, D01F 6/92

(54) **PROCESS FOR PRODUCTION OF POLYESTER**

(30) Priority: 12.10.2006 JP 2006278545; 30.03.2007 JP 2007090788
(71) Applicant: Toray Industries, Inc., Tokyo, 103-8666 (JP)
(72) Inventor: HAYASHI, Gen, Shizuoka 411-8652 (JP); MORIMOTO, Kunihiro, Shizuoka 411-8652 (JP); KAWAJI, Tomio, Shizuoka 411-8652 (JP); AOYAMA, Masatoshi, Shizuoka 411-8652 (JP)
(74) Representative: Prüfer & Partner GbR European Patent Attorneys
(86) International application number: PCT/JP2007/069719
(87) International publication number: WO 2008/044690

(57) **Abstract**

Disclosed is a process for producing a polyester composition which can be obtained by polycondensation of a dicarboxylic acid or ester-forming derivative thereof and a diol or ester-forming derivative thereof in presence of a polycondensation catalyst, in which a polyester having a good color tone can be obtained by adding a specific phosphorus compound after a polycondensation catalyst is added and pressure reduction in polymerization reactor is started and before the polycondensation of the polyester is substantially completed, and at a time in which the polyester reaches 75% or more of the intrinsic viscosity to be finally reached in said polymerization reactor.

## Description

### Technical Field

The present invention relates to a process for producing a polyester excellent in color tone and thermal stability. In more detail, it relates to a process for producing a polyester which prevents a thermal decomposition reaction caused by a catalyst used at polymerization, and color tone of the polymer is better compared to conventional product, and in addition, color tone change when melted at high temperature is drastically small.

### Background Art

Polyesters are used for many purposes due to usefulness of their functionality, for example, they are used for clothing, industrial material and medical application. Among them, in view point of wide applicability and practical usefulness, polyethylene terephtalate is excellent and preferably used.

In general, polyethylene terephthalate is produced from terephthalic acid or ester-forming derivative thereof and ethylene glycol and, in commercial processes for producing a polymer of high molecular weight, as polycondensation catalyst, antimony compounds, germanium catalysts, titanium catalysts, etc., are widely used. These polycondensation catalysts accelerate polycondensation reaction, of course, of polyethylene terephthalate, but also accelerate side reactions such as thermal decomposition reaction or oxidation decomposition reaction. In particular, in cases such as where a compound having a high catalytic activity is used or where an amount of the catalyst is increased, since the side reaction is also significantly accelerated, there arises a problem that the polymer is colored yellow. What the polymer is colored yellowish is, for example, in case where the polyester is used as a fiber, especially for a fiber for clothing, not preferable since commercial value is spoiled.

For such a problem, investigations of improving the color tone or heat resistance of polymer by adding a phosphorus compound together with the polycondensation catalyst are widely tried. This method improves, by suppressing activity of the polycondensation catalyst by the phosphorus compound, the color tone or heat resistance of the polymer. For example, In Patent reference 1, in a process for producing a polyester in which a titanium compound is used as a catalyst, a method of adding phosphoric acid or phosphorous acid as phosphorus compound, and, in Patent references 2 and 3, methods of adding, as phosphorus compound, a phosphinic acid-based compound, a phosphine oxide-based compound, a phosphonous acid-based compound, a phosphinous acid-based compound or a phosphine-based compound are explicitly mentioned. However, when these methods are employed, although a certain effect is found in suppressing the side reaction, when a phosphorus compound of a specified amount or more is added, polymerization activity of the polycondensation catalyst is too much suppressed and a predetermined degree of polymerization cannot be reached, or, since the polymerization reaction time is delayed, there occurred a problem, as a result, that the color tone of the polymer aggravates.

To this problem, in Patent reference 4, molar ratio (Ti/P) of the titanium compound and the phosphorus compound is made into a specific range. By this method, although deactivation of catalyst of the titanium compound can surely be prevented, the effect is not sufficient, and it is impossible to obtain a polyester of which color tone or heat resistance is a certain level or more.

In order to solve this problem, a method of adding the phosphorus compound after finishing the polycondensation reaction is proposed. In Patent reference 5, a method in which after a polyethylene terephthalate in a molten state discharged from a polymerization machine, which carries out polycondensation reaction in a molten state, and a phosphorus compound are introduced into a mixing machine in a molten state or molten state, they are stirred and mixed to obtain an additive-containing polyethylene terephthalate is disclosed. Indeed, by employing this method, the deactivation of the polycondensation catalyst by the phosphorus compound can be prevented, but since the polyester and the phosphorus compound are mixed just after finishing the polycondensation reaction, the side reaction occurred just after the polycondensation reaction cannot be prevented, and, polymer degradation in the mixing step cannot be avoided.

Furthermore, in Patent reference 6, a phosphorus compound is added to a polyester in a molten state after finishing polycondensation under a reduced pressure condition, but in this method, too, the side reaction when the polycondensation is finished cannot be prevented, and, depending on a kind of phosphorus compound to be added, there is a problem that the phosphorus compound is scattered and is not added to the polyester.

Under these circumstances, in the present invention, as a result of intensive studies to solve the above-mentioned problem, it was found that the purpose of the present invention can be achieved by a process for producing a polyester **characterized in that** a trivalent phosphorus compound or a pentavalent phosphorus compound of which molecular weight is 100 (g/mol) or more is added after adding the catalyst and starting pressure reduction of the polymerization reactor and before substantially completing the polyester.
[Patent reference 1] JP-H6-100680A (scope of claims)
[Patent reference 2] JP-2004-217855A (scope of clams)
[Patent reference 3] JP-2004-292657A (scope of claims)
[Patent reference 4] JP-2000-256452A (scope of claims)
[Patent reference 5] JP-2004-359907A (scope of claims)
[Patent reference 6] JP-S48-79896A (scope of claims)

### Disclosure of the Invention

### Problems to be Solved by the Invention

The purpose of the present invention is to solve the above-mentioned conventional problems, that is, to provide a process for producing a polyester in which the thermal decomposition reaction caused by the catalyst used at polymerization is prevented, color tone of the polymer is better compared to conventional one, and in addition, color tone change with lapse of time when melted at high temperature is drastically small.

### Means to Solve the Problems

The purpose of the present invention is achieved by, in a process for producing a polyester by polycondensation between a dicarboxylic acid or ester-forming derivative thereof and a diol or ester-forming derivative thereof under presence of a polycondensation catalyst, a process for producing a polyester **characterized in that** a trivalent phosphorus compound or a pentavalent phosphorus compound of which molecular weight is 100 g/mol or more is added, after adding the polycondensation catalyst and starting pressure reduction in polymerization reactor and before substantially completing the polycondensation of the polyester, and at a timing when the polyester is 75% or more of its intrinsic viscosity to be finally reached in said polymerization reactor.

### Effect of the invention

Compared to polyesters obtained by conventional methods, color tone of the polymer is good, and in addition, color tone change when melted at high temperature can be made drastically small. This polyester can solve the problems such as an aggravation of color tone in producing step of molded articles such as for fibers, films and bottles.

### Best Mode for Carrying out the Invention

The polyester composition of the present invention is synthesized by, after subjecting a dicarboxylic acid or ester-forming derivative thereof and a diol or ester-forming derivative thereof to an esterification or ester interchange reaction, subjecting to a polycondensation. As polyesters obtainable by such a method, concretely, for example, polyethylene terephthalate, polytrimethylene terephthalate, polytetramethylene terephthalate, polycyclohexyl dimethylene terephthalate, polyethylene-2,6-naphthalene dicarboxylate, or polyethylene-1,2-bis(2-chlorophenoxy)ethane-4,4'-dicarboxylate, etc. are mentioned. Among them, most widely used polyethylene terephthalate or a copolymer of which 80% or more of repeating unit is ethylene terephthalate unit is preferable.

In the polyester composition of the present invention, it is essential to add a specific phosphorus compound after adding the polycondensation catalyst and the pressure reduction in the reactor to start a polycondensation reaction and before substantially completing the polyester. When the phosphorus compound is added in such a way, it is possible to extremely effectively prevent the deactivation of the polycondensation catalyst, and it is possible to obtain a polyester composition of which color tone, and in addition, color tone change with lapse of time when melted at high temperature is drastically small. The coloring of polyester or aggravation of heat resistance is caused by side reaction of polyester as explicitly mentioned in Handbook of Saturated Polyester Resin (The Nikkan Kogyo Shinbun, Ltd, 1st edition, P.178 to 198). In this side reaction of polyester, since carbonyl oxygen is activated by a metal catalyst and by β-hydrogen being pulled out, a vinyl end group component or an aldehyde component generates. By a polyene being formed by the vinyl end group or the like, the polymer is colored yellow. And, ester bonds of main chain are cut, to become a polymer poor in heat resistance.

In particular, when a titanium compound is used as the polycondensation catalyst, since its catalytic activity for the side reaction is also high, a large amount of vinyl end group component or aldehyde component generates, to result in a polymer colored yellow and poor in heat resistance.

To the polycondensation catalyst, the phosphorus compound acts to control activity of the polycondensation catalyst by appropriately interacting with the polycondensation catalyst.

However, in the conventional method in which the phosphorus compound is added before starting the polycondensation reaction, it is unavoidable to lower the activity for the polycondensation reaction together with the decrease of catalytic activity for side reaction of the polycondensation catalyst. However, according to the present invention, it is possible to suppress only the activity for side reaction while sufficiently maintaining the activity for the polycondensation catalyst.

In addition, the inventors investigated in detail on the coloring mechanism of the above-mentioned polyester, and estimated that the pulling out of the β-hydrogen of polyester and the reaction of generating vinyl end group component or aldehyde component arise in large amount just after substantially completing the polycondensation reaction of polyester, and for that reason, it is considered that the reaction of forming polyene from the vinyl end group component advances and the reaction is difficult to be prevented even by adding the phosphorus compound.

Based on such a consideration, by adding the phosphorus compound before substantially completing the polycondensation reaction of the polyester, not after substantially completing the polycondensation reaction, it was found that the pulling out of β-hydrogen which occurs just after completing the polycondensation reaction and the generation of the vinyl end group component or aldehyde component can peculiarly be prevented. This cannot be achieved by a conventional phosphorus compound or an adding method of phosphorus compound.

In usual, polyester is produced by, after adding a polycondensation catalyst to a dicarboxylic acid or ester-forming derivative thereof and a diol or ester-forming derivative thereof, reducing pressure in reactor to advance polycondensation reaction. Since various degrees of polymerization are requested in polyester depending on its use or purpose, at the timing when it reaches a predetermined degree of polymerization, an inert gas is introduced in the reactor to render inside of the reactor normal pressure or pressurized to stop the polycondensation reaction, and the reaction product is discharged to outside the reactor.

In the present invention, after reducing pressure in this reactor and starting polycondensation reaction and before substantially completing polycondensation of the polyester, it is essential to add a trivalent phosphorus compound or a pentavalent phosphorus compound of which molecular weight is 100 g/mol or more.

In the present invention, before substantially completing polycondensation of the polyester, the phosphorus compound is added. Here, the timing at which "substantially completing polycondensation" of the present invention means, in a batch-wise polycondensation process, the timing at which inside of the apparatus is returned to normal pressure by introducing an inert gas in the polycondensation reaction apparatus as a pre-operation of discharging the reacted polymer from the reaction apparatus, but the timing at which, even in case where the inside of apparatus is maintained in a reduced pressure, exhaust line valve is closed and the inside pressure of the reaction apparatus is not reduced any more also corresponds to that.

Furthermore, in a continuous polycondensation process, it is the time at which the polyester is discharged from the polycondensation reactor, and is the time after that the polyester is in a condition not further maintained under a lower pressure.

Whereas, in the continuous polycondensation process, "after starting pressure reduction in the polymerization reactor" of the present invention means that the reactant which flows in polymerization reaction apparatus flows into the first apparatus set at normal pressure or a pressurized condition.

In the present invention, when the addition of the phosphorus compound is before 2 minutes or more, preferably, before 5 minutes or more, more preferably, before 7 minutes or more of the time which completes the polycondensation reaction, it is preferable since the side reaction can be prevented. When the addition of the phosphorus compound is after the timing of 0.5 minutes before completion of the polycondensation reaction, because of reasons such as that dispersing time of the phosphorus compound is short, it becomes similar to an addition after a substantial completion of the polycondensation of polyester and a sufficient effect cannot be obtained in some cases.

Furthermore, as the timing of adding the phosphorus compound, by adding at timing when an intrinsic viscosity of the polyester in reaction apparatus is 75% or more of a target intrinsic viscosity of the polyester, the side reaction can effectively be prevented while deactivation of the polycondensation catalyst is kept very small. Preferably, it is 75% or more and 98% or less. The intrinsic viscosity of the polyester at the timing of addition of the phosphorus compound may be determined by the method mentioned later by sampling directly, or it may be calculated, from a torque loaded to a stirring blade of the reactor.

The phosphorus compound of the present invention may be added separately in several times, or may be continuously added by such as a feeder. In case of a batch-wise polycondensation, in case where the phosphorus compound is added, the phosphorus compound may be added alone, or may be added by being dissolved or dispersed in diol component such as ethylene glycol. However, when it is added with a large amount of diol component such as ethylene glycol, since a depolymerization of polyester becomes easy to be advanced, it is preferable that the phosphorus compound is added alone.

The phosphorus compound of the present invention is dissolvable or meltable in the polycondensation reactant, and it is preferable to be added by being filled in a capsule made of a polymer of substantially the same component as the polymer obtainable in the present invention. When the addition is carried out by putting the phosphorus compound in a capsule such as the above-mentioned, at adding to the polycondensation reactor under a reduced pressure, it is possible to prevent that the phosphorus compound is scattered and the phosphorus compound flows out into a pressure reducing line, or it is possible to add the phosphorus compound to the polymer in a predetermined amount. The capsule referred to in the present invention may be those which can keep the phosphorus compound together, for example, an injection molding container having a top or stopper or a bag-like article made of a sheet or film by sealing or sewing or the like are included. It is more preferable to make an air vent such as a hole in the above-mentioned capsule. When the phosphorus compound is added by being put in a capsule provided with an air vent, even it is added to the polycondensation reactor under a reduced pressure, it can be prevented that the phosphorus compound flows out into the pressure reducing line or it deposits on top or wall surface of the polymerization reactor due to an explosion of the capsule by an air expansion, and the phosphorus compound can be added in the polymer in a predetermined amount. Regarding thickness of the capsule, it is better to be thin since if it is too thick, its dissolving or melting takes a long time, but in consideration of a level of thickness which does not explodes at sealing and adding operations, 10 to 500 µm is preferable. And, it is preferable that the thickness is uniform and there is no thickness unevenness.

Furthermore, it is also possible that the phosphorus compound of the present invention is mixed beforehand in polyester or oligomer of polyester in a high content and the mixture is added. In case where it is mixed with the oligomer of polyester, when the intrinsic viscosity is made into 0.4 or less, it is preferable since it is possible to easily mix uniformly with the phosphorus compound by such as heating.

The process of producing polyester of the present invention may be either of a method carried out batch-wise or a method carried out continuously. The process for producing continuously is preferable since quality, especially, color tone becomes stable.

In the process for producing continuously, it is preferable to add the phosphorus compound in the final polycondensation reactor, in particular, when an average residence time of the polyester in the final polycondensation reactor after adding the phosphorus compound is 5 minutes or more and 30 minutes or less, color tone of the polymer to be obtained is hard to become yellowish and it is preferable.

Whereas, when the polyester of the present invention is produced continuously, adding method of the phosphorus compound may be either of continuous or discontinuous.

As the method of adding discontinuously, an arbitrary method such as a method of adding the phosphorus compound put into a capsule at every predetermined interval or a method of adding the phosphorus compound made into a pill at every predetermined interval can be employed, as far as concentration of the phosphorus in the polyester to be obtained as a product is substantially constant. The method of adding discontinuously is preferable since it can be done by a simple apparatus such as shown in Fig. 1. As the method of adding continuously, an arbitrary method such as a method of feeding a powder of the phosphorus compound continuously or a method of adding continuously in a suspended state with a medium such as ethylene glycol can be employed, but the method of adding a powder as it is preferable in view of easiness of maintaining degree of vacuum of the final polymerization reactor.

It is necessary that the phosphorus compound to be added in the present invention is a trivalent phosphorus compound or a pentavalent phosphorus compound of which molecular weight is 100 g/mol or more.

It is preferable that the phosphorus compound of the present invention has a melting point in the range of 100 to 400°C. When the melting point is 100°C or higher, at adding the phosphorus compound under a reduced pressure, the phosphorus compound is hard to be scattered, and it is easy to add a predetermined amount of the phosphorus compound in the polyester. And, when the melting point is 400°C or lower, it is preferable since the phosphorus compound is easy to be uniformly dispersed in the polyester, and a time until it is uniformly dispersed is shortened. The range of 115°C to 350°C is preferable and the range of 175°C to 300°C is more preferable.

When preferable ones as the above-mentioned trivalent phosphorus compound used in the present invention are mentioned concretely, for example, bis(2,6-di-tert-butyl-4-methyl phenyl) pentaerythritol-di-phosphite (melting point : 234 to 240°C) expressed by the following Formula 9, tris[2-{(2,4,8,10-tetra-t-butyl dibenz[d,f][1,3,2]-dioxaphosphepin-6-il) oxy}ethyl] amine (melting point: 190 to 210°C) expressed by Formula 10 or 6-[3-(3-t-butyl-4-hydroxy-5-methyl) propoxy]-2,4,8,10-tetra-t-butyl dibenz[d,f][1,3,2]-dioxaphosphepin (melting point : 115°C to 125°C) expressed by Formula 11, etc., are mentioned. Among them, the compound of Formula 9, as Adekastab PEP-36 (produced by Adeka Corporation), the compound of Formula 10, as IRGAFOS12 (produced by Ciba Specialty Chemicals K.K.) and the compound of Formula 11, as Sumilizer GP (produced by Sumitomo Chemical Co.), etc., are available.

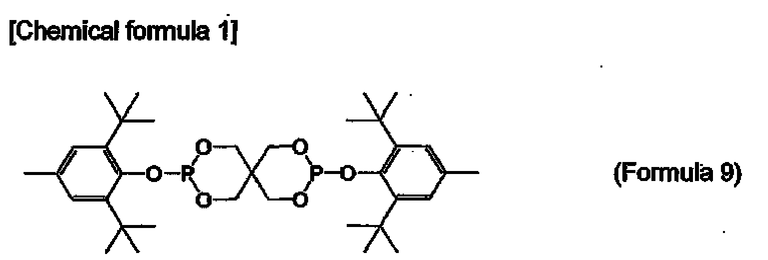

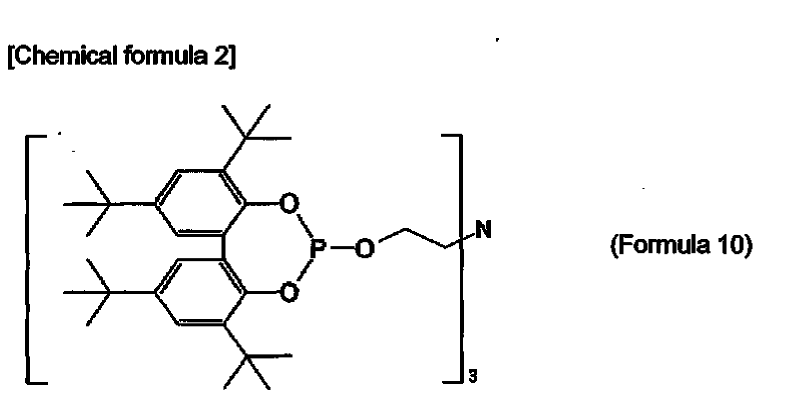

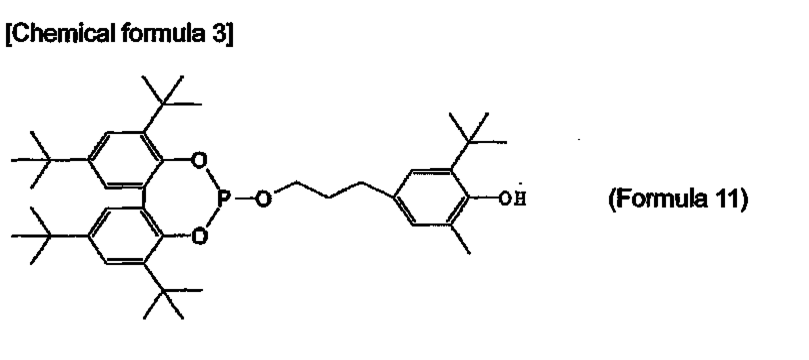

Furthermore, as the trivalent phosphorus compound, when the compound expressed by Formula 1 or Formula 2 is used, it is preferable since color tone of the obtained polyester becomes specially good, and, in particular, when the compound expressed by Formula 3 is used, it is preferable since color tone of the obtained polyester becomes good.

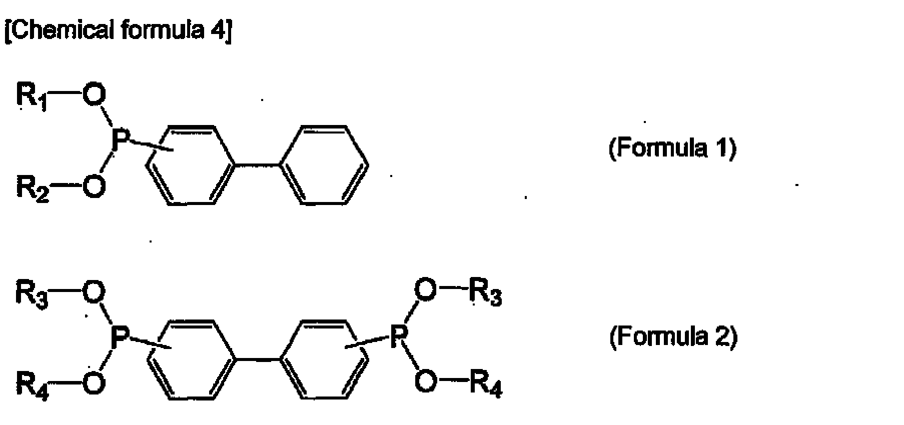

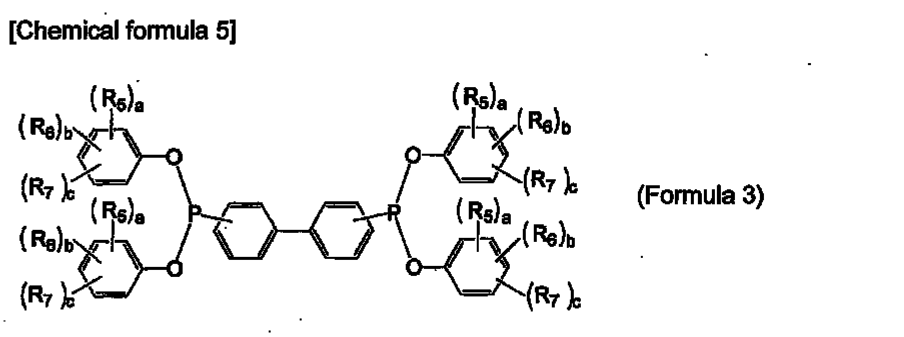

As the phosphorus compound expressed by the above-mentioned Formula 3, for example, as a compound of a=2, b=0, c=0, R₅=tert-butyl group, R₅=2nd or 4th position, tatrakis(2,4-di-t-butyl phenyl) [1,1-biphenyl]-4,4'-dill bisphosphonite is mentioned, and this compound is available as IRGAFOS P-EPQ (produced by Ciba Specialty Chemicals K.K.) or Sandostab P-EPQ (produced by Clariant Japan Co.).

Furthermore, the phosphorus compound expressed by Formula 4 is preferable since color tone or heat resistance of the obtained polyester becomes particularly good.

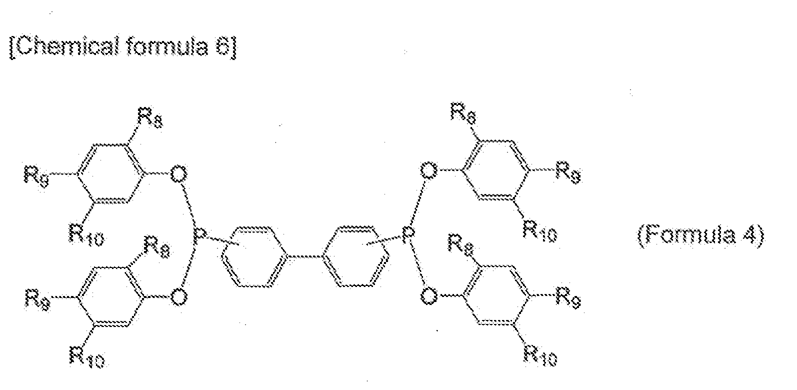

(In the above-mentioned Formula 4, HAVING 1 TO 20 CARBONS to R₁₀ independently denote hydroxyl group or a hydrocarbon group having 1 to 10 carbons, respectively.

As the phosphorus compound expressed by the above-mentioned Formula 4, as a compound of HAVING 1 TO 20 CARBONS=tert-butyl group, R₉=tert-butyl group and R₁₀=methyl group, tetrakis(2,4-di-t-butyl-5-methyl phenyl) [1,1-biphenyl]-4-,4'diil bisphosphonite (melting point : 234 to 240°C) is mentioned, and this compound is available as GSY-P101(produced by Osaki Industry Co.).

When the pentavalent phosphorus compound of which molecular weight is 100 g/mol or more used in the present invention is mentioned concretely, for example, phosphate-based compounds such as trimethyl phosphate (molecular weight 140), triphenyl phosphate (molecular weight 326), stearyl phosphate (mixture of mono- and di-ester) (mixture of molecular weights of 350 and 650), phosphonate-based compounds such as phenyl phosphonate (molecular weight 158), methyl phosphonate dimethyl ester (molecular weight 124), ethyl diethyl phosphonoacetate (molecular weight 224), phosphinate-based compounds such as bis(4-methoxyphenyl) phosphinate (molecular weight 278) or phosphine oxide-based compounds such as triphenyl phosphine oxide (molecular weight 278) are mentioned, and these may be used one kind alone or in of 2 kinds or more.

Furthermore, as the pentavalent phosphorus compound, when a compound expressed by Formula 5 or Formula 6 is used, it is preferable since color tone of the obtained polyester becomes especially good, and it is more preferable in case of Formula 7. Among them, when the compound of Formula 8 is used, it is preferable since color tone of the obtained polyester becomes better.

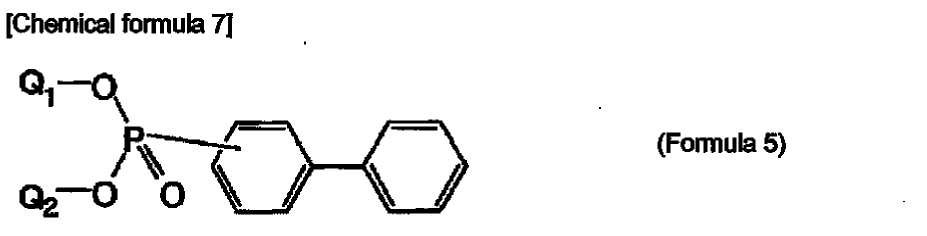

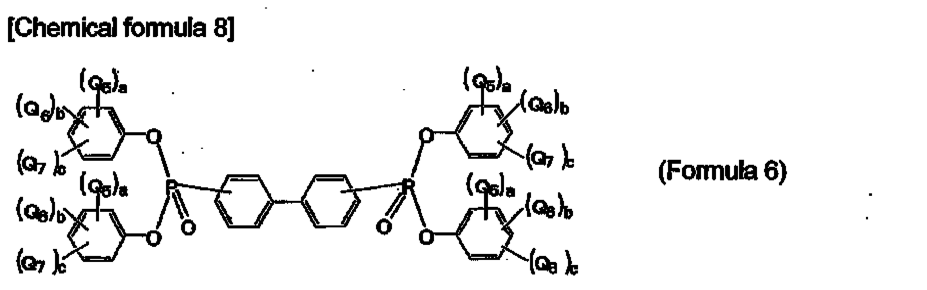

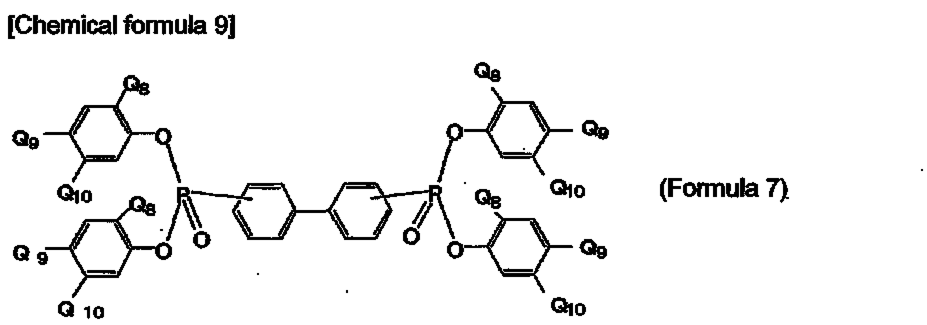

In the polyester obtained by the producing process of the present invention, it is preferable that the phosphorus compound, which is added after starting a polycondensation reaction, by reducing pressure in the reactor, and before substantially completing the polycondensation reaction, is added such that its amount is 1 to 1000 ppm, in terms of phosphorus atom, with respect to the polyester to be obtained. When it is in this range, it is preferable since color tone of the polyester or, coloring in producing step of molded articles such as a fiber, film or bottle becomes small. When the amount of addition is smaller than the above-mentioned range, a predetermined purpose or effect cannot be achieved in some cases, and, when the amount of addition is larger than the above-mentioned range, polycondensation catalyst is deactivated and the polymerization is delayed or the reaction is not advanced to a target degree of polymerization in some cases. It is preferable that an amount of addition of the phosphorus compound is 10 to 500 ppm, and more preferably, 20 to 150 ppm.

In the process for producing a polyester of the present invention, as the polycondensation catalyst, a titanium compound, an antimony compound, a germanium compound or an aluminum compound, etc., can be used. These polycondensation catalyst can be used alone or in combination, or in addition to these, a compound such as of sodium, potassium, lithium, magnesium, calcium, zinc, cobalt, manganese may be used together.

It is preferable that these polycondensation catalyst is added in an amount of 1 to 1000 ppm, in terms of metal atom, with respect to the polyester to be obtained. Among them, when a titanium compound is used as the polycondensation catalyst, it is preferable since a generation of a foreign substance is prevented.

Whereas, the polycondensation catalyst of the present invention refers to, in general, in a reaction which synthesizes polyester from a dicarboxylic acid or ester-forming derivative thereof and a diol or ester-forming derivative thereof, those having an effect contributing at least to an acceleration of the reaction (3) among (1) esterification reaction which is reaction of a dicarboxylic acid component and a diol component, (2) ester interchange reaction which is reaction of an ester forming derivative component of dicarboxylic acid and a diol component and (3) polycondensation reaction in which, after esterification reaction or ester interchange reaction has substantially finished, the obtained polyethylene terephthalate oligomer is converted into a high degree of polymerization by de-diol reaction. Accordingly, titanium oxide particle which is generally used as a matting agent of fiber or the like and which has substantially no effect as a catalyst to the above-mentioned reaction, is different from the titanium compound which can be used as the polycondensation catalyst of the present invention.

In case where the polycondensation catalyst is a titanium compound, it is preferable to add 1 to 30 ppm, in terms of titanium atom, with respect to the polyester to be obtained. When it is 3 to 15 ppm, it is preferable since thermal stability or color tone of the polymer becomes better. More preferably, it is 5 to 10 ppm.

When the titanium compound used as the above-mentioned polymerization catalyst is a titanium complex of which chelating agent is a polyvalent carboxylic acid and/or a hydroxy carboxylic acid and/or a nitrogen-containing carboxylic acid, it is preferable in view of thermal stability and color tone of the polymer. As chelating agents of the titanium compound, as polyvalent carboxylic acids, phthalic acid, trimellitic acid, trimesic acid, hemimellitic acid, pyromellitic acid, etc. are mentioned, as hydroxy carboxylic acids, malic acid, tartaric acid or citric acid, etc. are mentioned and as nitrogen-containing carboxylic aids, ethylene diamine tetraacetic acid, nitrilotripropionic acid, carboxy iminodiacetic acid, carboxy methyl iminodipropionic acid, diethylene triaminopentaacetic acid, triethylene tetraaminohexaacetic acid, iminodiacetic acid, iminodipropionic acid, hydroxyethyl iminodiacetic acid, hydroxyethyl iminodipropionic acid, methoxyethyl iminodtacetic acid, etc., are mentioned. These titanium compounds may be used alone or in combination.

Other than the above-mentioned polycondensation catalyst, for the purpose of controlling catalytic activity, a small amount of a phosphorus compound may be added in a stage before starting the pressure reduction in the polycondensation reactor, together with the polycondensation catalyst or before or after addition of the polycondensation catalyst. The phosphorus compound to be added here is not limited especially, and phosphite-based compound, phosphonite-based compounds, phosphinite-based compounds, phosphine-based compound, phosphate-based compound, phosphonate-based compound, phosphinate-based compound, phosphine oxide-based compound, etc. are mentioned. Among them, when a trivalent phosphorus compound or a pentavalent phosphorus compound of which molecular weight is 100 g/mol or more is used, it is preferable in view of color tone and heat resistance.

Since there are problems when the phosphorus compound to be added here is added in a large amount, unlike the phosphorus compound to be added after starting pressure reduction in the polymerization reactor and before substantially completing polycondensation of the polyester, that it deactivate the polycondensation catalyst to cause a delay of the polymerization, or that the polycondensation reaction is not advanced to a target degree of polymerization, it is preferable to add in an amount of 50 ppm or less, in terms of phosphorus atom, with respect to the polyester to be obtained. And, at this time, it is preferable that the phosphorus compound to be added after starting pressure reduction in the polymerization reactor and before substantially completing polycondensation of the polyester is 10 to 500 ppm, in terms of phosphorus atom, with respect to the polyester to be obtained.

In the polyester of the present invention, it is preferable that, after dried at 150°C for 12 hours under reduced pressure, change of color tone b value of before and after being melted at 290°C for 30 minutes under nitrogen atmosphere (hereafter, referred to as Δb value 290) is in the range of -5 to 3.5. As this value is smaller, decomposition and coloring by thermal degradation is smaller and more excellent in thermal stability. In case where this value exceeds 3.5, in producing step of a molded article such as a fiber, film and bottle, problem such as aggravation of color tone arises. It is preferably 2.5 or less, more preferably 2.0 or less and especially preferably 1.5 or lass. Furthermore, a polyester of which Δb value 290 is -5 to 0 is preferable since, when it passes a molding step next to the polycondensation reaction, color tone is not aggravated at all.

In the polyester of the present invention, it is preferable that color tone in Hunter value in a shape of chip is in the range of L value of 60 to 95, a value or -6 to 2 and b value of -5 to 5, respectively, in view point of color tone of molded article such as fiber or film. Furthermore, what is more preferable is the range of L value of 70 to 90, a value of -5 to 1 and b value of -3 to 3.

The polyester of the present invention is made into a useful product as a fiber by after formed into a filament state by melt extrusion molding or the like, to a drawing or a false-twisting or the like.

Whereas, to the polyester of the present invention, other than pigments such as titanium oxide and carbon black, conventional and publicly known antioxidant, anti-colorirg agent, light stabilizer, anti-static agent, UV absorbent, etc. may be added.

The process for producing a polyester the present invention is explained in the following. As a concrete example, an example of polyethylene terephthalate its described but not limited thereto.

Polyethylene terephtalate is usually made in any of the following processes.

That is, they are (A) a process in which terephthalic acid and ethylene glycol are used as starting materials, an oligomer is obtained by direct esterification reaction, and furthermore, a high molecular weight polymer is obtained by a subsequent polycondensation reaction, and (B) a process in which dimethyl terephthalate and ethylene glycol are used as starting materials, an oligomer is obtained by ester interchange reaction, and furthermore, a high molecular weight polymer is obtained by a subsequent polycondensation reaction. Here, as to the esterification reaction, the reaction is advanced without catalyst, but the above-mentioned titanium compound, etc. can also be used as catalyst. And, in the ester interchange reaction, compound such as of magnesium, manganese, calcium, cobalt, zinc or lithium or the above-mentione titanium compound are used as catalyst to advance the reaction, and after the ester interchange reaction is substantially completed, for the purpose of deactivating the catalyst used for the reaction, a phosphorus compound may be added. Whereas, the phosphorus compound to be added at this time is separately added from the phosphorus compound added after starting pressure reduction in the polymerization reactor and before substantially completing polycondensation of the polyester of the present invention.

The polyester of the present invention is obtained by, after adding the above-mentioned titanium compound or antimony compound or germanium compound as polycondensation catalyst to the oligomer obtained in an arbitrary stage in series of reaction of (A) or (B), preferably in the first half of the series of reaction of (A) or (B), reducing pressure in the reactor to start polycondensation reaction. At this time, after starting pressure reduction in the polymerization reactor and before substantially completing polycondensation of the polyester, a trivalent phosphorus compound or a pentavalent phosphorus compound of which molecular weight is 100 g/mol or more is added to obtain a target polyethylene terephthalate. This reaction is applicable to a system such as of batch-wise, semi-batch-wise or continuous.

### [Examples]

Hereafter, the present invention is explained in more detail with reference to examples. Whereas, the physical characteristics in the examples are determined in the following ways.

### (1) Intrinsic viscosity of polymer [η]

It was measured in o-chlorophenol as solvent at 25°C.

### (2) Color tone of polymer

It was measured as Hunter value (L, a, b value) by using a colorimeter (SM color computer type SM-T45, produced by Suga Test Instruments Co.).

### (3) Δb value 290

After polyester is dried at 150°C for 12 hours under a reduced pressure, and after being heated and melted under nitrogen atmosphere at 290°C for 30 minutes, the color tone was measured in the method (2), and its difference of before and after being heated and melted, that is, Δb value (after being heated and melted) - Ab value (before being heated and melted) was taken as Δb value 290.

### (4) Observation of deposited substance on spinneret

Amount of deposited substance around spinneret holes at 72 hours after starting a melt-spinning was observed by using a long-focused microscope. It was decided that a condition in which almost no deposited substance was found as A, a condition in which deposited substance was found but an operation was possible as B and a condition in which deposited substance was found and yam breakage occurs frequently as C.

### Example 1

To an esterification reaction vessel in which approximately 100kg of bis(hydroxyethyl) terephthalate is put beforehand and maintained at a temperature 250°C and a pressure 1.2×105 Pa, a slurry of high purity terephthalic acid (produced by Mitsui Chemicals, Inc.) 82.5kg and ethylene glycol (produced by Nippon Shokubai Co.) 35.4kg was gradually fed in 4 hours, and after the feeding, esterification reaction was carried out further in 1 hour, and the obtained esterification reaction product 101.5kg was transferred to a polycondensation vessel.

To the esterification reaction product, citric acid chelate titanium compound corresponding to 10 ppm in terms of titanium atom was added, furthermore, 5 minutes later, 0.3 wt%, in terms of titanium oxide particle, of ethylene glycol slurry of titanium oxide particle, with respect to the polymer was added. Furthermore, 5 minutes later, pressure of the reaction system was reduced to start reaction. As well as gradually raising temperature in the reactor from 250°C to 290°C, the pressure was reduced to 40 Pa. Both times to reach final temperature and final pressure were set to 60 minutes. At the timing when intrinsic viscosity of the reactant reaches 85% of a target intrinsic viscosity of the polyester composition (calculated by torque of the stirrer), from an upper portion of the reaction vessel, bis(2,6-di-tert-butyl-4-methyl phenyl) pentaerythritol-di-phosphite ("Adekastab PEP-36", melting point 236°C, molecular weight 633 (produced by Adeka Corporation) filled in a container and a top of thickness 0.2 mm, inner capacity 500 cm³ (total weight of container and top was 30g) with an air vent provided to the top, prepared beforehand by injection molding a polyethylene terephthalate) which corresponds to 1000 ppm (corresponding to 100 ppm in terms of phosphorus atom) with respect to the polymer was added. After that, the reaction was continued and when a predetermined stirring torque was reached, the reaction system was purged with nitrogen to return to normal pressure to stop the polycondensation reaction, and the reactant was discharged in a strand state, cooled, and just after that, subjected to a cutting to obtain a polymer pellet. Whereas, time from starting the pressure reduction to the arrival at the predetermined stirring torque was 2 hours 45 minutes.

The obtained polymer was a polyester excellent in color tone and color tone change with lapse of time when melted at high temperature.

Furthermore, this polyester was, after vacuum dried at 150°C for 12 hours, fed to a spinning machine and after melted by a melter, discharged from a spinning pack and taken up at a speed of 1000 m/min. At the melt-spinning step, deposited substance around the spinneret holes at the melt-spinning step was almost not found.

### Example 2

A polyester was polymerized and melt-spun in the same way as Example 1, however, except, 5 minutes before adding the citric acid chelate titanium compound, adding to the esterification reaction product 100 ppm (10 ppm in terms of phosphorus atom) of bis(2,6-di-tert-butyl-4-methyl phenyl) pentaerythritol-di-phosphite ("Adekastab PEP-36", produced by Adeka Corporation) with respect to the polymer. The obtained polymer was a polyester excellent in color tone and color tone change with lapse of time when melted at high temperature.

### Examples 3 and 4

Polyesters were polymerized and melt-spun in the same way as Example 2, except changing the timing of adding the phosphorus compound to after starting the reaction. In Examples 3 and 4, Ab value 290 of the obtained polymer was slightly large, but color tone was excellent Both polymer were in a range of which quality has no problem, and, in all runs, deposited substance around the spinneret holes at the melt-spinning step was almost not found.

### Examples 5 to 10

Polyesters were polymerized and melt-spun in the same way as Example 2, except changing the amount of addition of the phosphorus compound to be added after starting the reaction. In Examples 5 and 6, Δb value 290 was slightly large, but it was in a level of no problem in quality at all. And, in Example 7, Δb value was a little bit large, but it was in a level of no problem. In Example 8, the polymerization time was slightly delayed and b value was high, but Δb value 290 was small and excellent. In Example 9, Δb value 290 was a little bit large, but it was in a level which could be used. In-Example 10, b value was excellent, but Ab value 290 was a little bit large, but it was in a level which could be used. And, in all runs, deposited substance around the spinneret holes at the spinning was almost not found.

### Examples 11 to 16

Polyesters were polymerized and melt-spun in the same way as Example 2, except changing the kind of the phosphorus compound to be added after starting the reaction to tris[2-{(2,4,8,10-tetra-t-butyl dibenz[d,f][1,3,2]-dioxaphosphepin-6-il) oxy}ethyl] amine ("IRGAFOS12", melting point 200°C, molecular weight 1463, produced by Ciba Specialty Chemicals K.K., Example 11), 6-[3-(3-t-butyl-4-hydroxy-5-methyl) propoxy]-2,4,8,10-tetrat-butyl dibenz[d,f][1,3,2]-dioxaphosphepin ("Sumilizer GP", melting point 120°C, molecular weight 661, produced by Sumitomo Chemical Co., Example 12), tetrakis(2,4-di-t-butyl phenyl) [1,1-biphenyl]4,4'-diil bisphosphonite ("Sandostab P-EPQ", molecular weight 1035, melting point 85°C, produced by Clariant Japan Co., Example 13) or tetrakis(2,4-di-t-butyl-5-methyl phenyl)[1,1-biphenyl]-4,4'-diil bisphosphonite ("GSY-P101", molecular weight 1051, produced by Osaki Industry Co., Examples 14 to 16). In all of Examples 11 and 14 to 16, both of color tone and Δb value 290 were extremely good. And, in Examples 12 and 13, color tone was slightly yellowish, but it was in a level of no problem in quality. And, in all runs, deposited substance around the spînneret holes at the spinning was almost not found.

### Examples 17 to 20

Polyesters were polymerized and melt-spun in the same way as Example 2, except changing the kind of polycondensation catalyst, but a deposited substance around the spinneret holes at the spinning was slightly found, and increase of filtering pressure occurred but they were in levels of no problem. In Example 18 in which tetrakis ethylene glycolate titanium compound was used, the polymer was a little bit yellowish, but it was in a level of no problem. And, in Example 19, antimony trioxide was used as the polycondensation catalyst. The color tone was in a level of no problem, but a small amount of deposited substance around the spinneret holes at the spinning was found, but it was in a level of no problem. In Example 20, an aluminum compound was used. The polymer was a little bit yellowish, but it was in a level of no problem.

### Example 21

By using a continuous polymerization apparatus of polyester comprising 5 reaction vessel in which 2 reaction vessels (esterification vessel 1 and esterification vessel 2) to carry out esterification reaction and 3 reaction vessels (polymerization vessel 1, polymerization vessel 2 and final polycondensation reactor) to carry out polycondensation reaction are connected in series, a slurry made by mixing terephthalic acid 4993 Kg/hr and ethylene glycol 2145 Kg/hr was continuously fed to an esterification vessel 1 which was controlled to an average reaction time 4.8 hr, a reaction temperature 258°C and a reaction pressure 123 kPa, and ethylene glycol evaporated with water by-produced by the esterification reaction was refluxed by a rectification column, to obtain a polyester oligomer of which degree of esterification reaction is 90.6%, and then this polyester oligomer was transferred to the esterification vessel 2 which was controlled to a average residence time 0.70 hr, reaction temperature 262°C and reaction pressure 101 kPa, and 70 ppm (7 ppm in terms of phosphorus atom) of bis(2,6-di-tert-butyl-4-methyl phenyl) pentaerythritol-di-phosphite ("Adetcastab PEP-36", produced by Adeka Corporation) with respect to the polymer and as a polymerization catalyst, citric acid chelate titanium compound corresponding to 10 ppm in terms of titanium atom were added, and furthermore, 0.3 wt%, in terms of titanium oxide particle, of an ethylene glycol slurry of titanium oxide particle with respect to the polymer was added, to produce a polyester oligomer.

Successively, the polyester oligomer was, by a liquid pump, via a filter for a polyester oligomer, subjected to a polycondensation reaction in the order of the polymerization vessel 1(average residence time 0.94 hours, reaction temperature 275°C, reaction pressure 11.9 kPa ) and the polymerization vessel 2 (average residence time 0.95 hours, reaction temperature 285°C, reaction pressure 2.27 kPa ) at high temperature and under vacuum while removing by-produced ethylene glycol, and then transferred to the final polycondensation reactor (average reaction time 2.5 hours, reaction temperature 287°C, reaction pressure 0.199 kPa ) to be subjected to a polycondensation reaction to obtain a polyester composition.

At this time, polymer was sampled from the final polycondensation reactor where its average residence time becomes 2.33 hours (determined by proportional calculation from average residence time of the final polycondensation reactor), and it was found to be 97% of target intrinsic viscosity,
At this position where an average residence time in the final polycondensation reactor becomes 2.33 hours, a trivalent phosphorus compound : bis(2,6-di-tert-butyl-4-methyl phenyl) pentaerythritol-di-phosphite ("Adekastab PEP-36", produced by Adeka Corporation, filled in a container with a top of thickness 0.2 mm, inner capacity 500 cm³ (total weight of container and top was 30g) with an air vent provided to the top, prepared beforehand by injection molding a polyethylene terephthalate) which corresponds to 1000 ppm with respect to the polymer such that an average amount of addition of phosphorus becomes 100 ppm in terms of phosphorus content, was added in every 0.5 minutes from an upper portion of the final polycondensation reactor.

The addition of the above-mentioned trivalent phosphorus compound was carried out by alternatively opening and dosing upper and lower valves of an apparatus for addition, and, internal pressure was controlled by a valve for keeping uniform pressure such that the degree of vacuum of the final polycondensation reactor was not affected.

The obtained polymer was a polyester excellent in color tone and color tone change with lapse of time when melted at high temperature.

Furthermore, this polyester was, after vacuum dried at 150°C for 12 hours, fed to a spinning machine and after melted by a melter, discharged from a spinning pack and taken up at a speed of 1000 m/min. At the melt-spinning step, deposited substance around the spinneret holes at the spinning was almost not found.

[Table 1]

**Table 1**

| | Catalyst additive to be added before starting pressure reduction | | | | Phosphorus compound to be added after starting pressure reduction | | | | Polymerization hours (min) | Characteristics of polymer | | | | | Deposited substance around spinneret |
|---|---|---|---|---|---|---|---|---|---|---|---|---|---|---|---|
| | Polycondensation catalyst | | Phosphorus compound | | Phosphorus compound | | Time t1 (min) | Intrinsic viscosity when phosphorus compound was added)/ (target intrinsic viscosity) (%) | | [η] | Color tone | | | | |
| | Kind | Amount of addition (in terms of Ti content or Sb₂O₅ or Al content) [ppm] | Kind | Amount ofaddition (in terms of P content) [ppm] | Kind | Amount of addition (in terms of P content) [ppm] | | | | | L value | A value | B value | Δb value 290 | |
| Example 1 | Citric acid chelate | 10 | Compound A | 0 | Compound A | 100 | 10 | 85% | 165 | 0.66 | 79 | -3.5 | -0.3 | 1.1 | A |
| Example 2 | Citric acid chelate | 10 | Compound A | 10 | Compound A | 100 | 10 | 85% | 165 | 0.66 | 79 | -3.5 | 0.0 | 1.1 | A |
| Example 3 | Citric acid chelate | 10 | Compound A | 10 | Compound A | 100 | 6 | 98% | 161 | 0.66 | 79 | -3.5 | 0.8 | 1.7 | A |
| Example 4 | Citric acid chelate | 10 | Compound A | 10 | Compound A | 100 | 4 | 99% | 161 | 0.66 | 79 | -3.5 | 0.3 | 2.6 | A |
| Example 5 | Citric acid chelate | 10 | Compound A | 10 | Compound A | 30 | 10 | 85% | 165 | 0.66 | 79 | -3.5 | 0.0 | 1.1 | A |
| Example 6 | Citric acid chelate | 10 | Compound A | 10 | Compound A | 125 | 10 | 85% | 165 | 0.06 | 79 | -3.5 | 0.0 | 1.1 | A |
| Example | Citric | 10 | Compound | 10 | Compound | 10 | 10 | 85% | 163 | 0.66 | 77 | -3.6 | 0.7 | 1.7 | A |
| 7 | acid chelate | | A | | A | | | | | | | | | | |
| Example 8 | Citric acid chelate | 10 | Compound A | 10 | Compound A | 450 | 10 | 85% | 170 | 0.66 | 80 | -3.4 | 4.0 | 0.9 | A |
| Example 9 | Citric acid chelate | 10 | Compound A | 10 | Compound A | 3 | 10 | 85% | 161 | 0.66 | 76 | -3.6 | 2.0 | 2.6 | A |
| Example 10 | Citric acid chelate | 10 | Compound A | 10 | Compound A | 900 | 10 | 85% | 184 | 0.66 | 81 | -3.4 | 5.0 | 0.6 | A |

| | | | | | | | | | | | | | | | |
|---|---|---|---|---|---|---|---|---|---|---|---|---|---|---|---|
| Time t1 : Time (min) from timing of addition of phosphorus compound to substantial completion of polymerization Compound A : Bis(2,6-di-tert-butyl-4-methyl phenyl) pentaerythritol-di-phosphite (Adekastab PEP-36, melting point 236°C, produced by Adeka Corporation) | | | | | | | | | | | | | | | |

[Table 2]

**Table 2**

| | Catalyst additive to be added before starting vacuum reduction | | | | Phosphorus compound to be added after starting vacuum reduction | | | | Polymerization time (min) | Characteristics of polymer | | | | | Deposited substance around spinneret |
|---|---|---|---|---|---|---|---|---|---|---|---|---|---|---|---|
| | Polycondensation catalyst | | Phosphorus compound | | Phosphores compound | | Time t1 (min) | (intrinsic viscosity when phosphores compound (target intrinsic viscosity) (%) | | [η] | Color tone | | | | |
| | Kind | Amount of addition (in terms of TI content or Sb₂O₃ or Al content) | Kind | Amount of addition (in terms of P content) [ppm] | Kind | Amount of addition (in terms of P is added)/ content) [ppm] | | | | | L value | A value | B value | Δb value 290 | |
| Example 11 | Citric acid chelate | 10 | Compound A | 10 | Compound B | 100 | 10 | 85% | 168 | 0.66 | 79 | -3.3 | 0.6 | 1.2 | A |
| Example 12 | Citric acid chelate | 10 | Compound A | 10 | Compound C | 100 | 10 | 85% | 164 | 0.66 | 78 | -3.3 | 1.0 | 1.5 | A |
| Example 13 | Citric acid chelate | 10 | Compound A | 10 | Compound D | 100 | 10 | 85% | 161 | 0.66 | 77 | -3.3 | 1.4 | 1.8 | A |
| Example 14 | Citric acid chelate | 10 | Compound A | 10 | Compound E | 100 | 10 | 85% | 161 | 0.66 | 77 | -3.3 | 1.4 | 0.8 | A |
| Example 15 | Citric acid chelate | 10 | Compound A | 10 | Compound E | 450 | 10 | 85% | 170 | 0.66 | 79 | -3.3 | 1.4 | -0.5 | A |
| Example 16 | Citric acid chelate | 10 | Compound A | 10 | Compound E | 100 | 6 | 98% | 161 | 0.66 | 78 | -3.5 | 1.5 | 0.9 | A |
| Example 17 | Trimellitic acid chelate | 10 | Compound A | 10 | Compound A | 100 | 10 | 85% | 167 | 0.66 | 79 | -3.5 | 0.6 | 1.3 | A |
| Example 18 | Titanium compound P | 10 | Compound A | 10 | Compound A | 100 | 10 | 85% | 164 | 0.66 | 79 | -3.3 | 2.3 | 2.5 | A |
| Example | Antimony | 300 | Compound | 10 | Compound | 100 | 10 | 85% | 165 | 0.66 | 80 | -3.3 | -1.0 | 1.1 | B |
| 19 | trioxide | | A | | A | | | | | | | | | | |
| Example 20 | Aluminum compound | 15 | Compound | 10 | Compound A | 100 | 10 | 85% | 164 | 0.66 | 79 | -3.3 | 2.3 | 2.5 | A |
| Example 21 | Citric acid chelate | 7 | Compound A | 10 | Compound A | 100 | 10 | 97% | 2.5 hours | 0.66 | 80 | -3.3 | -1.5 | 1.1 | A |

| | | | | | | | | | | | | | | | |
|---|---|---|---|---|---|---|---|---|---|---|---|---|---|---|---|
| Time t1 : Time (min) from timing of addition of phosphorus compound to substantial completion of polymerization Compound A : Bis(2,6-di-tert-butyl-4-methyl phenyl) pentaerythritol-di-phosphite (Adekastab PEP-36, melting point 236°C produced by Adeka Comporation) Compound B : Tris[2-((2,4,8,10-tetrat-butyl dibenz[d,f][1,3,2]-dioxaphosphepin-6-II) oxy)ethyl] amine (IRGAFOS12, melting point 200°C, produced by Ciba Specially Chemicals K.K.) Compound C : 6-[3-(3-t-Butyl-4-hydroxy-5-methyl) propoxy]-2,4,8,10-tetral-butyl dibenz[d,f][1,3,2]-dioxaphosphepin (Sumilizer GP, melting point 120°C, produced by Sumitomo Chemical Co.) Compound D : Tetrakis(2,4-di-t-butyl phenyl)[1,1-biphenyl]-4,4'-diil bisphosphonite]("Sandastab P-EPQ", melting point 85°C, produced by Clariant Japan Co.) Compound E : Tetrakis(2,4-di-t-butyl-5-methyl phenyl)[1,1-biphenyl]-4,4'-diil bisphosphonite ("GSY-P101", produced by Osaki industry Co.) Aluminum compound : Aluminum salt of ethyl (1-naphthyl) methyl phosphonate The titanium compound P : Ethylene glycol tetraadditive of Titanium | | | | | | | | | | | | | | | |

### Comparative example 1

A polyester was polymerized and melt-spun in the same way as Example 1, except without adding the phosphorus compound after starting the reaction. The obtained polymer was inferior in color tone, and color tone change with lapse of time when melted at high temperature was inferior as Δb value 290=3.6.

### Comparative example 2

A polyester was polymerized in the same way as Example 2, except changing to add the phosphorus compound before starting the reaction which was added after starting the reaction in Example 2. As a result, a predetermined stirring torque was not reached.

### Comparative examples 3 to 4

Polyesters were polymerized and melt-spun in the same way as Example 2, except adding the phosphorus compound after substantially completing the polymerization (after reaching a predetermined target torque). In Comparative example 3, the content was discharged 0.25 minutes after adding the phosphorus compound. In Comparative example 4, after reaching the predetermined stirring torque, valve of distillling off pipe was closed while keeping under reduced pressure condition, although inside the system was not mechanically pressure-reduced (at this time, it was found that the degree of vacuum slightly raised (worsened)), and phosphorus compound was added and after stirring and mixing for 5 minutes, the content was discharged. In Comparative example 3, the obtained polymer was inferior in Δb value 290. And, a foreign substance which was estimated to be an aggregated phosphorus was found in the polymer, and at the time of melt-spinning, deposited substance around the spinneret holes was found, and filtering pressure increase and yam breakage frequently occurred. And, in Comparative example 4, the obtained polymer was inferior in color tone.

### Comparative example 5

A polyester was polymerized and melt-spun in the same way as Example 1, except changing the kind of phosphorus compound to be added after starting the reaction to phosphoric acid (melting point 42°C, molecular weight 98, produced by Wako Pure Chemical Industries, Ltd.) which is a pentavalent phosphorus compound. The obtained polymer was inferior in color tone and, color tone change with lapse of time when melted at high temperature was inferior.

### Examples 22 to 25

Polyesters were polymerized and malt-spun in the same way as Example 1, except using tetrakis ethylene glycolate titanium compound as polycondensation catalyst, and changing the kind of phosphorus compound to be added after starting the reaction to triphenyl phosphate (melting point 50°C, molecular weight 326, produced by Wako Pure Chemical Industries, Ltd, Example 22), phenyl phosphonate (melting point 160°C, molecular weight 158, produced by Nippon Chemical Industrial Co., Example 23), ethyl diethyl phosphonoacetate (melting point 160°C, molecular weight 223, produced by Wako Pure Chemical Industries, Ltd, Example 24) or methyl phosphonic acid dimethyl (molecular weight 124, produced by Wako Pure Chemical Industries, Ltd,), Example 25) which are pentavalent phosphorus compound. The obtained polymer was yellowish in color tone, but it was in a level of no problem, and color tone change with lapse of time when melted at high temperature was also a little large, but it was in an acceptable range.

### Example 26

A polyester was polymerized and melt-spun in the same way as Example 1, except using tetrakis ethylene glycolate titanium compound as polycondensation catalyst, changing the kind of phosphorus compound to be added after starting the reaction to tetra(ethoxy)[1,1-biphenyl]-4,4'-diphosphonate (molecular weight 426, produced by Johoku Chemical Co.) which is a pentavalent phosphorus compound. The obtained polymer was good in both of color tone and color tone change with lapse of time when melted at high temperature.

### Comparative examples 6 to 7

The phosphorus compound to be added after starting the reaction was added at a timing of intrinsic viscosity of less than 75% of a target intrinsic viscosity of polyester composition. The obtained polymer was inferior in color tone.

### Comparative example 8

In the same way as Example 21, but except without adding the trivalent phosphorus compound in final polycondensation reactor, the same was carried out. A polyester was polymerized and melt-spun in the same way as Example 1 except without adding the phosphorus compound after starting the reaction. The obtained polymer was inferior in color tone, and, it was inferior in color tone change with lapse of time when melted at high temperature as Δb value 290=3.6.

[Table 3]

**Table 3**

| | Catalyst additive to be added before starting pressure reduction | | | | Phosphorus compound to be added after starting pressure reduction | | | | Polymerization time (min) | Characteristics of Polymer | | | | | Deposited substance around spinneret |
|---|---|---|---|---|---|---|---|---|---|---|---|---|---|---|---|
| | Polycondensation catalyst | | PHosphorus compound | | Phosphorus compound | | Time 11 (min) | (Intrinsic viscosity when phosphorus compound added)/ (target intrinsic viscosity) | | [η] | Color tone | | | | |
| | Kind | Amount of addition (in terms of atom) [ppm] | Kind | Amount of addition (in terms of atom) [ ppm] | Kind | Amount of addition (in terms of atom) [ppm] | | | | | L value | A value | B value | Δb value 290 | |
| Comp. Example 1 | Citric acid chelate | 10 | Compound A | 10 | - | - | - | - | 160 | 0.66 | 76 | -3.5 | 3.5 | 3.6 | A |
| Comp. Example 2 | Citric acid chelate | 10 | Compound A | 110 | - | - | - | - | (*1) | - | - | - | - | - | - |
| Comp. Example 3 | Citric acid chelate | 10 | Compound A | 10 | Compound A | 100 | 0.25 | 100%(*2) | 160 | 0.66 | 77 | -3.7 | 3.5 | 3.0 | C |
| Comp. Example 4 | Citric acid chelate | 10 | Compound A | 10 | Compound A | 100 | 0 | 100% | 160 | 0.70 | 79 | -3.7 | 5.1 | 1.3 | A |
| Comp. Example 5 | Citric acid chelate | 10 | Compound A | 10 | Compound F | 100 | 10 | 85% | 175 | 0.66 | 74 | -3.6 | 3.2 | 3.6 | A |
| Example 22 | Titanium compound P | 10 | Compound A | 10 | Compound G | 300 | 10 | 90% | 170 | 0.66 | 74 | -3.4 | 3.2 | 3.4 | A |
| Example 23 | Titanium compound P | 10 | Compound A | 10 | Compound H | 300 | 10 | 90% | 175 | 0.66 | 75 | -3.6 | 3.1 | 3.2 | A |
| Example 24 | Titanium compound P | 10 | Compound P A | 10 | Compound 1 | 300 | 10 | 90% | 175 | 0.66 | 76 | -3.4 | 2.9 | 2.9 | A |
| Example 25 | Titanium compound P | 10 | Compound A | 10 | Compound J | 300 | 10 | 90% | 172 | 0.66 | 74 | -3.4 | 3.3 | 3.5 | A |
| Example 26 | Titanium | 10 | Compound | 10 | Compound | 100 | 10 | 86% | 165 | 0.66 | 75 | -2.7 | 1.8 | 1.5 | A |
| | compound P | | A | | K | | | | | | | | | | |
| Comp. Example 6 | Citric acid chelate | 10 | Compound A | 10 | Compound A | 100 | 50 | 45% | 194 | 0.66 | 79 | -3.6 | 5.1 | 1.2 | A |
| Comp. Example 7 | Citric acid chelate | 10 | Compound A | 10 | Compound A | 100 | 45 | 55% | 180 | 0.66 | 79 | -3.5 | 5.2 | 1.1 | A |
| Comp. Example 8 | Citric acid chelate | 10 | Compound A | 10 | - | - | - | - | 150 | 0.66 | 76 | -3.6 | 2.0 | 3.6 | A |

| | | | | | | | | | | | | | | | |
|---|---|---|---|---|---|---|---|---|---|---|---|---|---|---|---|
| Time t1 : Time (min) from timing of addition of phosphorus compound to substantial completion of polymerization (*1) Polymerization reaction was not reached to specified intrinsic viscosity. (*2) Intrinsic viscosity increase in 0.25 minutes could not be detected. Compound F : Phosphoric acid (melting point 42°C, molecular weight 98, produced by Wako Pure Chemical industries, Ltd.) Compound G : Triphenyl phosphate (melting point 50°C, molecular weight 326, produced by Wako Pure Chemical industries. Ltd.) Compound H : Phenyl phosphonate (melting point 160°C, molecular weight 158, produced by Nippon Chemical Industrial Co.) Compound I : ethyl diethyl phosphonoacetate (melting point 160°C, molecular weight 224, produced by Wako Pure Chemical industries, Ltd.) Compound J : methyl phosphonic acid dimethyl (molecular weight 124, produced by Wako Pure Chemical industries, Ltd.,) Compound K : tetraethoxy[1,1-biphenyl]-4,4'-diphosphonate (molecular weight 426, produced by Johoku Chemical Co.) | | | | | | | | | | | | | | | |

### [Industrial Applicability]

The Polyester obtainable by the producing method of the present invention is, compared to polyesters obtained by conventional methods, good in color tone of the polymer, and in addition, it is possible to drastically decrease color tone change with lapse of time when melted at high temperature. This polyester can be widely applied to molded articles such as a fibers, film and bottle.

## Claims

1. A process for producing a polyester by polycondensation of a dicarboxylic acid or ester-farming derivative thereof and a diol or ester-forming derivative thereof in presence of a polycondensation catalyst, which is a process for producing a polyester **characterized in that** a trivalent phosphorus compound or a pentavalent phosphorus compound of which molecular weight is 100 g/mol or more is added after a polycondensation catalyst is added and pressure reduction in polymerization reactor is started and before the polycondensation of polyester is substantially completed, and at a timing in which the polyester reaches 75% or more of an intrinsic viscosity to be finally reached in said polymerization reactor.

2. A process for producing a polyester according to Claim 1, **characterized in that** the timing at which the phosphorus compound is added is a timing in which the polyester reaches 75% or more and 98% or less of the intrinsic viscosity to be finally reached in said polymerization reactor.

3. A process for producing a polyester according to any one of Claims 1 to 2, **characterized in that** an amount of the phosphorus compound added is 1 to 1000 ppm in terms of phosphorus atom with respect to the polyester.

4. A process for producing a polyester according to any one of Claims 1 to 3, **characterized in that** a melting point of the phosphorus compound is 100°C to 400°C.

5. A process for producing a polyester according to any one of Claims 1 to 4, **characterized in that** the trivalent phosphorus compound is expressed by the following formula 1 or formula 2. 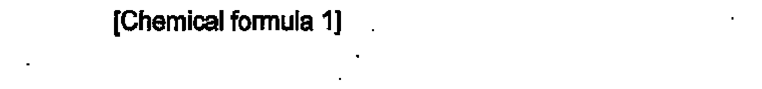 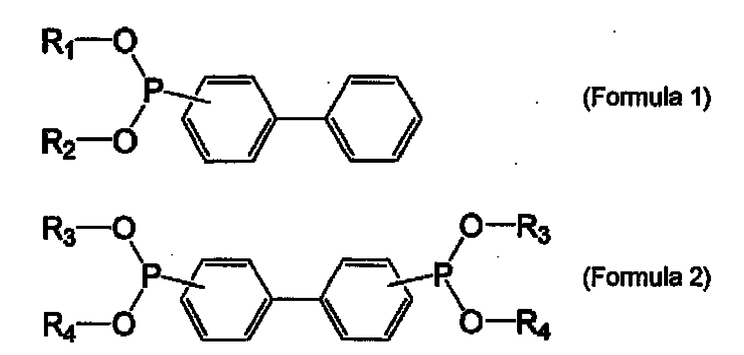 (In the above-mentioned Formula 1 and Formula 2, R₁ to R₄ independently denote hydroxyl group or a hydrocarbon group having to 20 carbons, respectively)

6. A process for producing a polyester according to any one of Claims 1 to 4, **characterized in that** the trivalent phosphorus compound is a compound expressed by Formula 3. 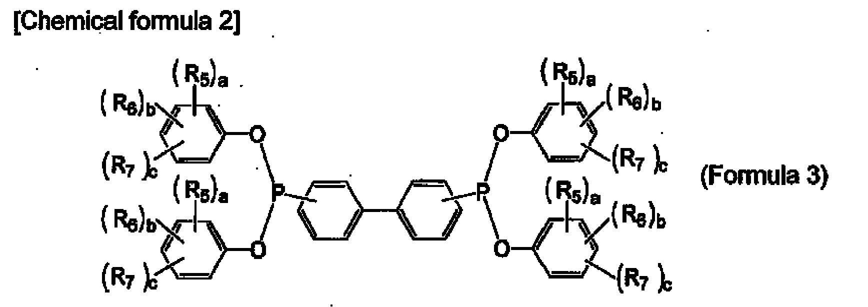 (In the above-mentioned Formula 3, R₅ to R₇ independently denote hydroxyl group or a hydrocarbon group having 1 to 10 carbons, respectively, and a+b+c is an integer of 0 to 5.)

7. A process for producing a polyester according to any one of Claims 1 to 4, **characterized in that** the trivalent phosphorus compound is a compound expressed by Formula 4. 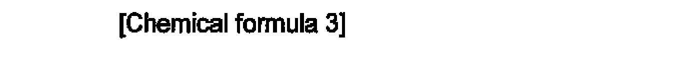 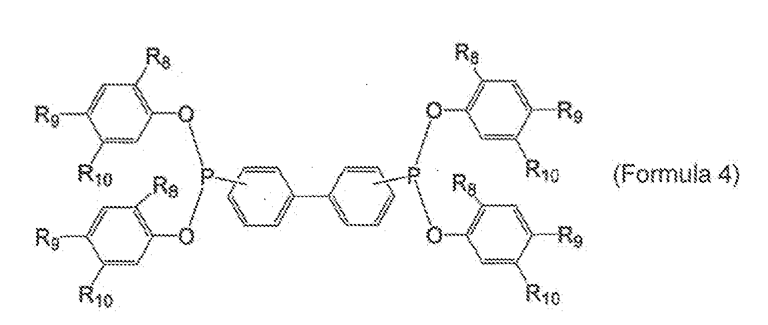 (In the above-mentioned Formula 4, R₆ to R₁₀ independently denote hydroxyl group or a hydrocarbon group having 1 to 10 carbons, respectively.)

8. A process for producing a polyester according to any one of Claims 1 to 4, **characterized in that** the pentavalent phosphorus compound is expressed by the following Formula 5 or Formula 6. 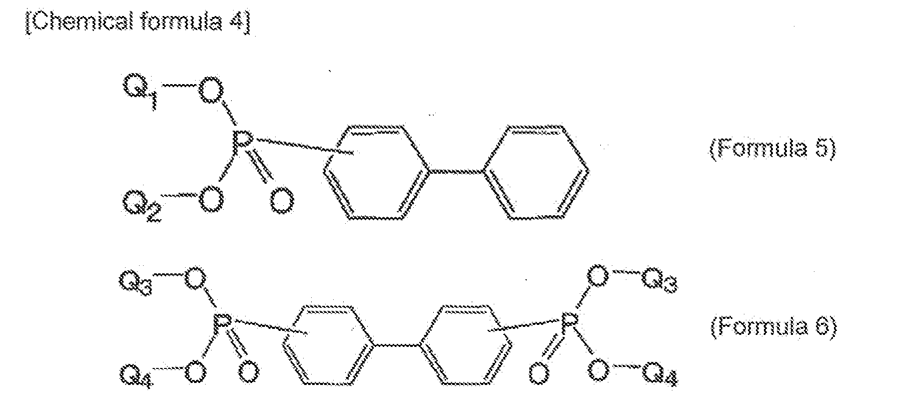 (In the above-mentioned Formula 5 or Formula 6, Q₁ to Q₄ independently denote hydroxyl group or a hydrocarbon group having 1 to 20 carbons, respectively)

9. A process for producing a polyester according to any one of Claims 1 to 4, **characterized in that** the pentavalent phosphorus compound is a compound expressed by Formula 7. 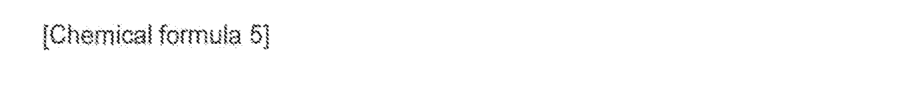 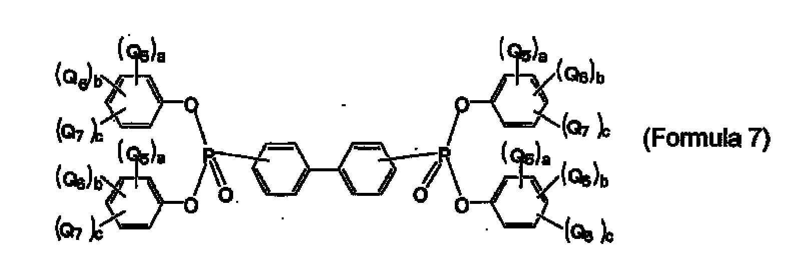 (In the above-mentioned Formula 7, Q₅ to Q₇ independently denote hydroxyl group or a hydrocarbon group having 1 to 10 carbons, respectively, and a+b+c is an integer of 0 to 5.)

10. A process for producing a polyester according to any one of Claims 1 to 4, **characterized in that** the pentavalent phosphorus compound is a compound expressed by Formula 8. 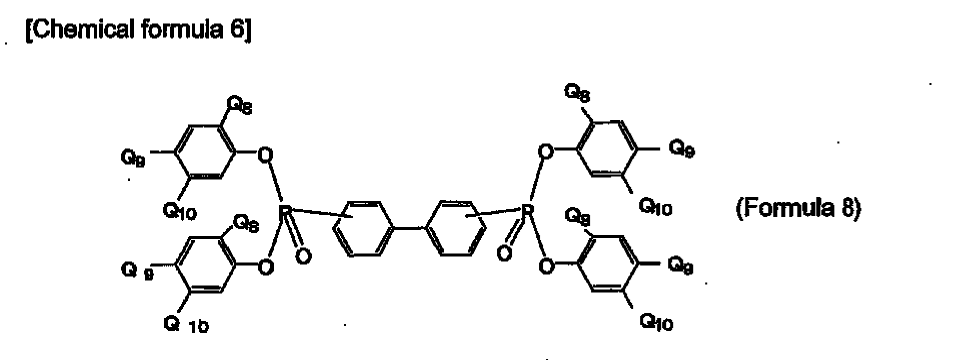 (In the above-mentioned Formula 8, Q₈ to Q₁₀ independently denote hydroxyl group or a hydrocarbon group having 1 to 10 carbons, respectively.)

11. A process for producing a polyester according to any one of Claims 1 to 10, **characterized in that** a titanium compound is used as the polycondensation catalyst.

12. A process for producing a polyester according to Claim 11, **characterized in that** the titanium compound used as the polycondensation catalyst is a titanium complex of which chelating agent is at least one selected from the group consisting of a polyvalent carboxylic acid, a hydroxy carboxylic acid and a nitrogen-containing carboxylic acid.

13. A process for producing a polyester according to any one of Claims 1 to 12, **characterized in that** the phosphorus compound is added by being put in a capsule consisting mainly of a polyester.

14. A process for producing a polyester according to any one of Claims 1 to 13, **characterized in that**, before starting pressure reduction in the polymerization reactor, a trivalent phosphorus compound or a pentavalent phosphorus compound of which molecular weight is 100 (g/mol) or more is added in an amount of 0 to 50 ppm, in terms of phosphorus atom, with respect to the polyester to be obtained, and in addition, after pressure reduction in the polymerization reactor Is started and before the polyester reaches the degree of polymerization to be finally reached in said polymerization reactor, a trivalent phosphorus compound or a pentavalent phosphorus compound of which molecular weight is 100 (g/mol) or more is added in an amount of 10 to 500 ppm with respect to the polyester to be obtained.

15. A process for producing a polyester according to any one of Claims 1 to 14, **characterized in that** the phosphorus compound is added to the polyester after mixing with a polyester oligomer of which intrinsic viscosity is 0.4 or less.

16. A process for producing a polyester according to any one of Claims 1 to 5, **characterized in that** the process for producing a polyester is continuous.

17. A process for producing a polyester according to Claim 16, **characterized in that** the phosphorus compound is added in the final polycondensation reactor.

18. A process for producing a polyester according to Claim 16 or 17, **characterized in that** a residence time of the polyester in the final polycondensation reactor after adding the phosphorus compound is 30 minutes or less.

19. A process for producing a polyester according to any one of Claims 16 to 18, **characterized in that** a residence time of the polyester in the final polycondensation reactor after adding the phosphorus compound is 5 minutes or more.

20. A process for producing a polyester according to any one of Claims 16 to 19, **characterized in that** the phosphorus compound is added intermittently.

21. A process for producing a polyester according to any one of Claims 1 to 20, **characterized in that** 80% or more of repeating unit of the polyester is ethylene terephthalate unit.

22. A polyester **characterized in that,** after dried under reduced pressure at 150°C for 12 hours, when subjected to a melting treatment at 290°C for 30 minutes under nitrogen atmosphere, compared to color tone b value before the drying under reduced pressure and the melting, a change of the color tone b value after the drying under reduced pressure and the melting is -5 to 3.5.

23. Afiber constituted with the polyester described in Claim 22.

24. A film constituted with the polyester described in Claim 22.

25. A hollow molding constituted with the polyester described in Claim 22.
